# EUROPEAN PATENT SPECIFICATION

(11) **EP 2 886 012 B1**
(45) Date of publication and mention of the grant of the patent: **01.03.2017**
(21) Application number: 14197964.1
(22) Date of filing: 15.12.2014
(51) Int. Cl.: A47B 96/06, F16B 12/26, F16B 12/14

(54) **FASTENING SYSTEM FOR FURNITURES**
BEFESTIGUNGSSYTEM FÜR MÖBEL
SYSTEME DE FIXATION POUR DES MEUBLES

(30) Priority: 17.12.2013 IT PD20130345
(43) Date of publication of application: 24.06.2015
(73) Proprietor: PERMO s.r.l., 35024 Bovolenta (PD) (IT)
(72) Inventor: Francescon, Flavio, 35126 Padova (IT)
(74) Representative: Morabito, Sara

(56) References cited:
- EP-A1- 2 881 010
- AT-A4- 505 626
- FR-A5- 2 125 722
- GB-A- 1 204 071
- US-B2- 7 021 019

## Description

### Field of the invention

This invention relates to a fastening system for attaching a shelf or a bracket to an item of furniture or the like.

### State of the art

Typically an item of furniture comprises vertical uprights and top and bottom horizontal panels, mainly one lower and one upper panel, which bound the structure of the item of furniture, and may comprise one or more horizontal intermediate panels known as shelves, or brackets.

Various systems for inserting and securing brackets to the uprights of an item of furniture or in general to connect together two components of furniture located at an angle of 90° to each other are known in the art.

For example a shelf may be supported with vertical movement on supporting means projecting from the upright, or the shelf may be inserted into suitable spaces made along the walls of the upright by performing a movement which is horizontal and perpendicular to the upright.

However these systems are not particularly stable since in the former system the supports offer purely vertical support and the shelves may be easily detached even by applying a light force giving rise to lifting, traction or any combination thereof, so the system is unstable.

In the latter system the supports only provide limited resistance to horizontal movement, and therefore by applying a moderate force the user can easily detach the shelves, so this system is also unstable.

Other known systems provide for the use of a pin tensioned by an eccentric device: a pin is fixed in the vertical upright, the head of the pin is shaped and intended to be inserted in the seat formed laterally in the shelf which has to be attached. A hole perpendicular to the axis of the seat is also formed in the shelf and through this a securing bush of an eccentric type is inserted. The bush has a lower opening suitable for housing the head of the pin. The bush is caused to rotate by means of a suitable tool, engaging the head of the pin, which in turn generates tension between the upright and the shelf.

Another solution in the state of the art provides for the presence of a grub screw located within a bush in one of the two parts and a tie rod located in the second part in such a way that screwing up the grub screw places tension on the tie bar, thus securing the two parts in a perpendicular position.

In both the two systems described above a tool must be used to screw up or secure the device, tie bar or other in one of the two parts which have to be secured onto for example the upright, and possibly a different tool must be used to secure the eccentric device or grub screw located in the second of the two parts which are to be attached, that is the shelf, in order to attach the shelf and the upright together.

A fastening system comprising a supporting element and a separate locking device is known from GB1204071A.

Panels provided with a hole with an eyelet and a coupling member intended to be inserted in the holes for mutually coupling the panels are known from US 7,021,019.

### Object of the invention

The technical problem underlying this invention is that of providing a fastening system for attaching a shelf to an upright of an item of furniture or the like which overcomes the limitations stated with reference to the cited known art.

In particular, one object of the invention is to provide a fastening system through which fastening operations can be simplified, at the same time making them quicker.

The abovementioned technical problem is solved by a fastening system constructed in accordance with claim 1.

The system according to the invention permits repeated assembly and dismaritling of the item of furniture, guaranteeing at the same time that the shelves will be firmly secured to the uprights even on subsequent assembly. In addition to this, with the system according to the invention any damage to the shelves during assembly is limited or eliminated.

The system according to the invention is also particularly dimensionally stable over time and strong.

Any deformation in the system according to the invention is extremely limited and so also are breakages following prolonged use.

Although explicit reference is made to shelves or brackets mounted in such a way as to define a substantially horizontal supporting plane in the following description, the system according to the invention is also suitable for use with shelves defining non-horizontal supporting planes.

The system is also suitable for use with supporting elements other than shelves or brackets, for example components for suspending clothing, ties, or even vertical panels, etc.

The system is suitable for the attachment of two furniture components which have to be located perpendicularly with respect to each other.

Other features of the invention will be apparent from the following detailed description with reference to the appended figures.

### Brief description of the figures

Figures 1a and 1b are respectively a front axonometric view and a view in lateral cross-section of a supporting element in the fastening system according to the invention;
Figure 2 is a front axonometric view of a locking device for the fastening system according to the invention,
Figure 3 is an axonometric exploded view of part of an upright and the attachment pins;
Figure 4 is an axonometric exploded view of a shelf of an item of furniture and a supporting element in the fastening system according to the invention;
Figure 5 is an axonometric view of the upright and the shelf in Figures 3 and 4 respectively in an abutted position;
Figure 5a is a view in magnified cross-section of a detail of Figure 5;
Figures 6 and 7 are views similar to that in Figure 5 but relating to different stages in assembly;
Figures 6A and 7A are magnified views of details in Figures 6 and 7 respectively;
Figure 7B is a view in magnified cross-section of a detail in Figure 7;
Figure 8 is a view in lateral cross-section of the upright and shelf in Figure 5 at a different stage in assembly;
Figure 9 is an axonometric view of the fastening system according to the invention which illustrates the supporting element and the locking device separately in a final stage of attachment.
Figures 10A-10C are diagrammatical front views of a supporting element 1 according to the invention in three different assembly sequences.

### Detailed description of the invention

The figures show a fastening system 100 for attaching a shelf 4, or other supporting element in an item of furniture, to a structure of an item of furniture.

In particular fastening system 100 according to the invention is suitable for attaching horizontal shelves to vertical uprights, or the sides of an item of furniture, or in general to attach together elements of furniture which are located perpendicularly to one another.

Fastening system 100 according to the invention may be used to attach a supporting element other than a shelf, such as for example elements for hanging clothes, ties or trousers, non-horizontal shelves, vertical panels, or also furniture elements located at an angle other than 90° to each other, to a structure of an item of furniture.

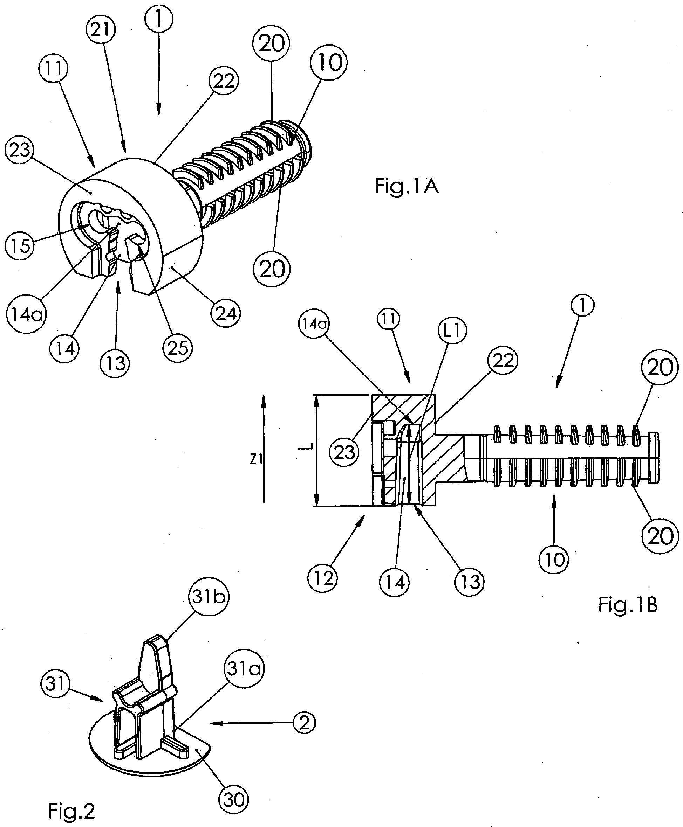

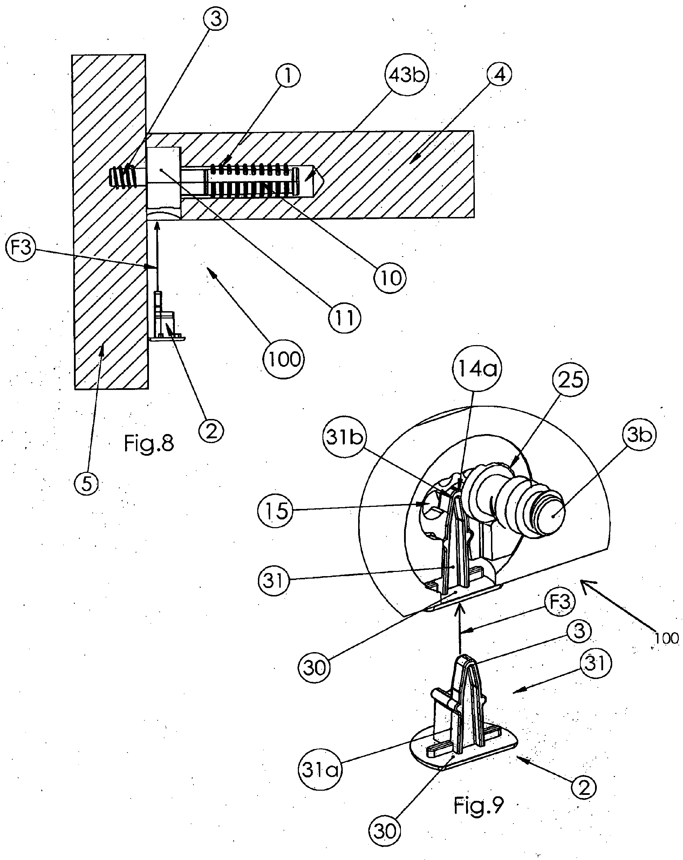

Fastening system 100 comprises a supporting element 1, shown in greater detail in Figures 1A and 1B, 5A, 6A, 7A, 7B, and a locking device 2, illustrated in greater detail in Figures 2 and 9, which are intended to act together with a attachment pin to attach a shelf to an upright, as will be more particularly explained below.

Supporting element 1, attachment pin 3 and locking device 2 are separate bodies which are associated to secure a supporting element to a structure of an item of furniture.

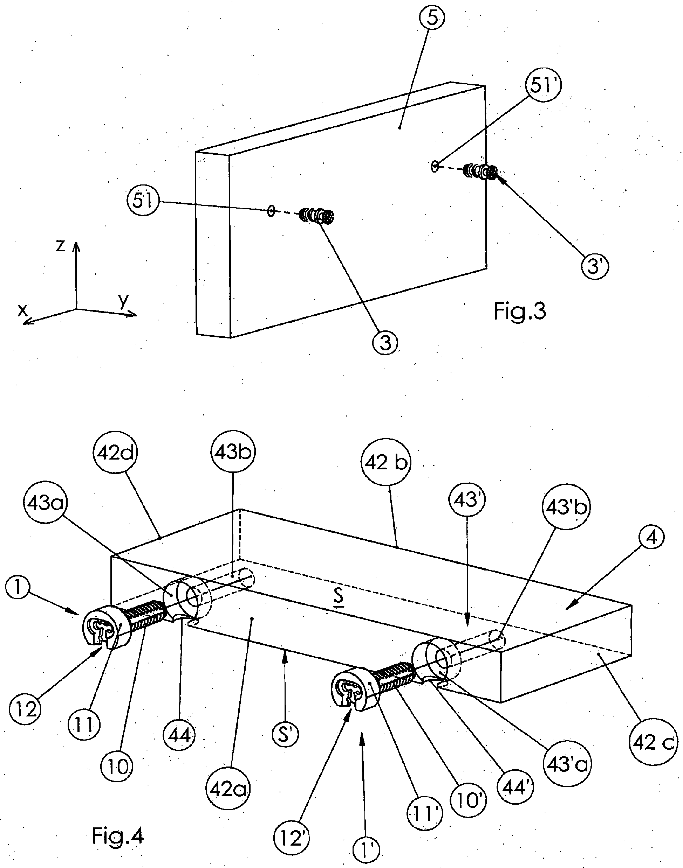

Locking device 2 may be removably associated with supporting element 1 to lock attachment pin 3 and supporting element 1 together. By removing locking device 2 it is possible to move attachment pin and supporting element 1 with respect to each other, as will be clarified below. Supporting element 1 and locking device 2 are intended to be associated with a shelf 4, as may better be seen in Figure 8, to attach shelf 4 to the uprights of an item of furniture, an upright 5 being partly illustrated in Figures 3 and 5-8. Considering a three-dimensional reference system XYZ, the vertical axis is indicated below as the Z axis, the longitudinal axis as the X axis and the transverse or horizontal axis as the Y axis.

In the version illustrated, shelf 4 is rectangular in shape and is bounded by two opposite longitudinal edges 42a, 42b intended to face uprights 5 of the structure of the item of furniture to which shelf 4 must be attached when in use, and two opposing transverse edges 42c, 42d, one of which is intended to constitute the visible edge of shelf 4, and two opposing base surfaces, an upper base surface S which faces upwards when shelf 4 is in use and is usually intended to constitute the supporting surface of shelf 4, and an opposing lower base surface S'.

Two holes 43, 43' provided in positions which are longitudinally apart (along longitudinal axis X) and intended to receive two different supporting elements 1, 1' to attach them to shelf 4, as may be seen in Figures 4-6, and as more particularly explained below, are defined in each of longitudinal edges 42a, 42b of shelf 4.

In particular each hole 43, 43' comprises a seat 43a, 43'a defined in longitudinal edge 42a or 42b of shelf 4 and is intended to house a head 11 of supporting element 1 and a longitudinal seat 43b, 43'b extending from corresponding seat 43a, 43'a in the direction of the transverse axis Y in shelf 4 intended to house an anchoring element 10 of supporting element 1, as will be more particularly explained below.

An opening 44, 44' defined in one of the two base surfaces S, S' of shelf 4 and intended to allow locking device 2 to be inserted, as will be more particularly described below, is also provided at the location of each hole 43, 43'.

Preferably opening 44 is provided in the surface of the lower base S' of shelf 4, that is the base surface opposite the intended supporting surface S, in such a way that it is not readily visible during use of the item of furniture obtained with shelf 4.

Although a shelf 4 provided with holes 43, 43' on only one of two longitudinal edges 42b is illustrated in the appended drawings, these holes may be provided in both longitudinal edges 42b, 42c to increase the stability of shelf 4.

In other versions not illustrated, a number of holes other than two, for example one or three, depending upon the dimensions and/or the weight and/or the final orientation of the shelf which has to be attached and/or the final use of the supporting element, are provided on the longitudinal edge or on both longitudinal edges of shelf 4. The longitudinal distance between the holes is also selected on the basis of the dimensions and/or weight of the shelf or in general of the supporting element.

Uprights 5 are usually flat in shape and extend along a vertical axis Z and a longitudinal axis X, and are provided with pairs of hooking holes suitably positioned along vertical axis Z of the upright in order to attach shelves 4 at different desired heights on upright 5.

Each pair of hooking holes comprises a first and a second hole 51, 51' at a distance from each other in the direction of longitudinal axis X.

A corresponding attachment pin 3, 3' intended to act together with a corresponding supporting element (1) to attach shelf 4 to upright 5, as will be more particularly explained below, is inserted into each hooking hole 51, 51'.

Each attachment pin 3, 3' comprises a shank 3b, 3'b intended to be inserted into a hooking hole 51, 51' of upright 5 and a head 3a, 3'a having larger radial dimensions than corresponding shank 3b, 3'b and positioned in such a way that when in use it faces shelf 4 to engage a corresponding supporting element 1, 1' to attach shelf 4 to upright 5, as will be more particularly described below.

The attachment pins are provided with hooking elements to lock the pins firmly in the hooking holes.

In the version illustrated hooking holes 51, 51' of each pair of holes are positioned in the same longitudinal axis X at a desired mutual distance which depends on the dimensions of upright 5 and shelf 4. In this way shelf 4 may be positioned horizontally, that is its supporting surface S is horizontal, that is it lies in a plane parallel to the XY plane, but in other versions holes 51, 51' of the same pair of holes are positioned at different heights with respect to vertical axis Z mutually spaced in relation to longitudinal axis X, the supporting surface S of shelf 4 lying in a plane transverse to the XY plane.

Supporting element 1 is intended to be inserted in a hole 43 formed in shelf 4 and comprising a head 11 intended to be housed in seat 43a formed in longitudinal edge 42b of shelf 4 and an anchoring member 10 intended to be inserted into longitudinal seat 43b to stably attach supporting element 1 to shelf 4.

Anchoring member 10 is provided with anchoring elements shaped as fins 20 extending upon anchoring member 10 in a radial direction and intended to increase friction between anchoring member 10 and the wall of longitudinal seat 43b to stably attach supporting element 1 in hole 43. In other versions not illustrated anchoring member 10 may provide anchoring elements other than fins, for example pressure or threaded anchoring elements, etc.

Supporting element 1 and hole 43 are mutually dimensioned in such a way that supporting element 1 is housed in hole 43 in such a way that it cannot be seen.

Head 11 of supporting element 1 comprises an internally hollow body 21 bounded by an end wall 22 in which anchoring element 10 is inserted, a front edge 23 and a side edge 24 shaped in such a way as to define a slot 12.

Slot 12 is provided with an entry opening 13 to allow head 3a of pin 3 to enter/leave slot 12 and the sliding channel 14 extending from entry opening 13 along an axis of insertion Z to an end portion 14a of sliding channel 14 and intended to slidably house head 3a of pin 3 when shelf 4 is inserted onto the upright.

Walls 14b of the sliding channel are inclined with respect to the vertical axis of insertion Z by an angle α of between 0.5° and 15° so as to define an entry opening 13 having a length D considered along longitudinal axis X which is longer than the length of sliding channel 14 in order to facilitate entry of pin 3 into slot 12.

At end portion 14a slot 12 comprises a first eyelet 15 and a second eyelet 25 located on opposite sides with respect to each other of sliding channel 14 in relation to longitudinal axis X and communicating with sliding channel 14. First and second eyelets 15, 25 are shaped in such a way as to house head 3a of pin 3 when shelf 4 is inserted onto uprights 5, as will be more particularly described below.

First eyelet 15 and second eyelet 25 are located preferably symmetrically with respect to sliding channel 14, that is with respect to vertical axis of insertion Z, and at a distance from the latter of "t" considered along longitudinal axis X of between 0.5 and 10 mm, preferably between 2 and 4 mm, depending upon the dimensions of head 11.

Between sliding channel 14 and each eyelet 15 or 25 there is a pair of facing edges 41, 42 and 41', 42' respectively which are intended to define entry opening "A" from sliding channel 14 into each eyelet 15 or 25, entry opening "A" of each eyelet 15 or 25 having dimensions which are smaller than the eyelet itself.

In particular, the extension of entry opening "A" along vertical axis Z for each eyelet 15 or 25 is less than the extension of eyelet 15, 25 along vertical axis Z.

The edges of each pair of edges 41, 42 and 41', 42' are dimensioned in such a way as to define an entry opening "A" having dimensions which in particular when considered along vertical axis of insertion Z are smaller than the dimensions of shank 3b of pin 3 and constitute means for retaining pin 3 in each eyelet 15 or 25. In addition to this, the edges of each pair of edges 41, 42 and 41', 42' are resiliently deformable in such a way as to allow pin 3 to move in sliding channel 14 into one of eyelet 15, 25 and constitute resilient retaining means for pin 3 in eyelet 15 or 25.

The provision of two eyelets located in supporting element 1 on opposite sides with respect to axis of insertion Z makes it possible to ease the operations of positioning supporting element 1 in hole 43 and easing assembly operations. In addition to this the symmetrical positioning of the two eyelets makes it possible to position supporting element 1 on either of two longitudinal edges 42a, 42b of shelf 4 without distinction, but respecting their orientation along vertical axis Z.

In a version not illustrated slot 12 of supporting element 1 is provided with a single eyelet at a distance from axis of insertion Z.

This distance makes it possible to prevent pin 3 from accidentally escaping from slot 12 through lateral movement along axis of insertion Z, as more particularly explained below.

Considering a transverse axis with respect to vertical axis of insertion Z, in the version illustrated along longitudinal axis X, a front opening 26 adjacent to sliding channel 14 having a width "d1" is defined in front edge 23 of head 11, which is smaller than or equivalent to the width of sliding channel 14 in such a way as to allow shank 3b of pin 3 but not its head 3a to pass, thus preventing pin 3 from undesirably escaping from sliding channel 14 through movements along transverse axis Y.

Similarly the other front openings 26' defined in front edge 23 in relation to eyelets 15, 25 have smaller dimensions than the dimensions of eyelets 15, 25 so as to allow shank 3b of pin 3 but not its head 3a to pass through, thus preventing the pin from undesirably escaping by movements along transverse axis Y.

Inner wall 28 of front edge 23, that is the part facing sliding channel 14, is inclined at an angle of inclination β of between 0.5° and 25°, preferably between 1° and 6°, with respect to the direction of axis of insertion Z.

Thus the distance W between inner wall 28 of the front edge 23 and rear wall 22 varies along sliding channel 14, the distance being a maximum at entry opening 13 and a minimum at end portion 14a.

In this way, during relative movement between pin 3 and sliding channel 14 head 3a of pin 3 is moved in the direction of transverse axis X towards rear wall 22 generating a corresponding tension between shelf 4 and upright 5. Locking device 2 comprises a base portion 30 shaped in such a way as to shapingly coupling with opening 44 provided in lower base surface S' of shelf 4 in such a way as to cover it, and a locking element 31 extending from the base portion in a direction perpendicular to base portion 30 and intended to interact with pin 3 and supporting element 1 to lock pin 3 in eyelet 15 or 25 of supporting element 1, as will be more particularly described below. Locking element 31 comprises a base 31a defined in base portion 30 of locking device 2 and a projection 31b opposite base 31a and designed to interact with pin 3 to lock it in one of eyelets 15 or 25 provided in supporting element 1, as will be more particularly described below. Locking element 31 has the shape of a wedge thinning from base 31a to projection 31b in such a way as to facilitate the insertion of locking element 31 into slot 12, as more particularly described below.

During assembly a first and a second supporting element 1, 1' are anchored in a shelf 4, inserting them into corresponding holes 43, 43' and anchoring members 10, 10' in longitudinal seats 43b, 43'b of corresponding holes 43, 43', as illustrated in Figure 4.

If the holes are provided on both longitudinal edges, this operation is repeated for each of the two longitudinal edges 42a, 42b of shelf 4.

A first and a second attachment pin 3, 3' are inserted into first hole 51 and second hole 51' respectively of a pair of hooking holes defined in upright 5 with their corresponding heads 3a, 3a' facing shelf 4 which has to be attached, as illustrated in Figure 3.

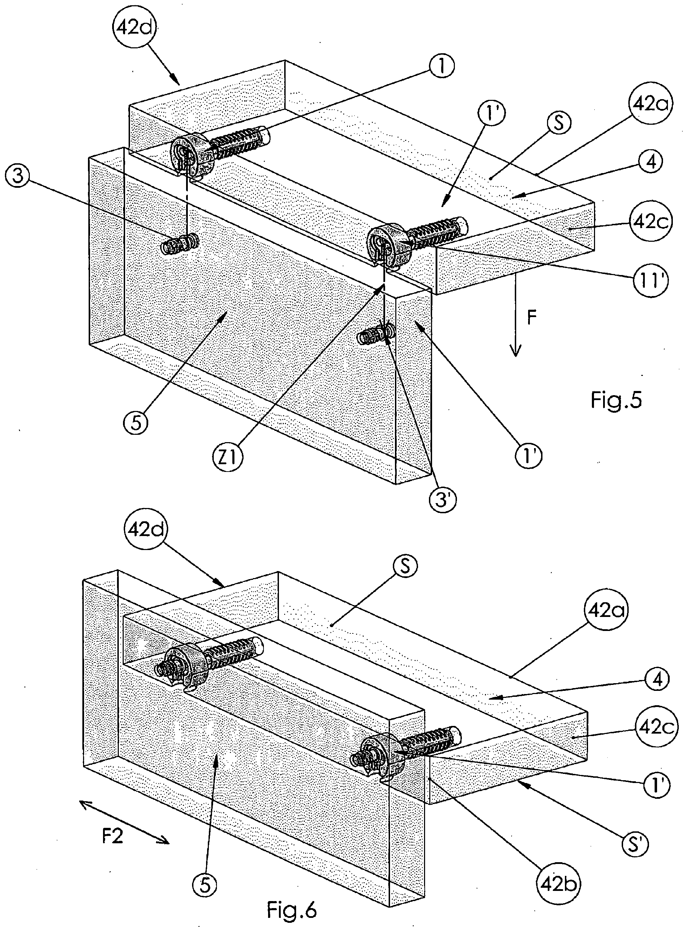

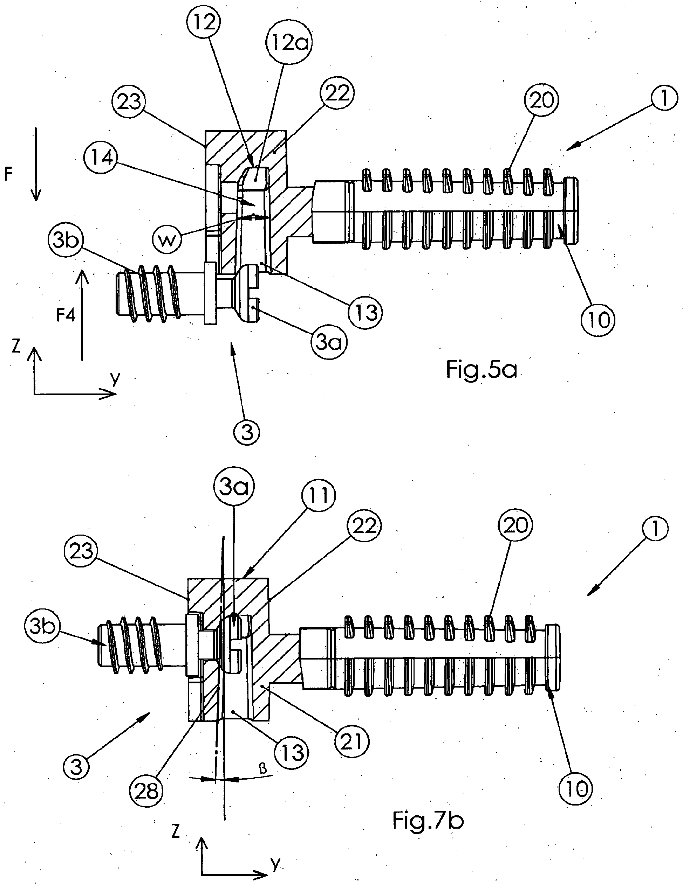

Subsequently shelf 4 is offered up to upright 5 in such a way as to place slots 12, 12' of supporting elements 1, 1' adjacent to pins 3, 3', as illustrated in Figure 5.

In this position the operator pushes shelf 4 along axis of insertion Z in the direction of arrow F in Figures 5 and 5a, so as to insert head 3a, 3'a of each pin 3, 3' into slot 12, 12' of corresponding supporting element 1, 1'.

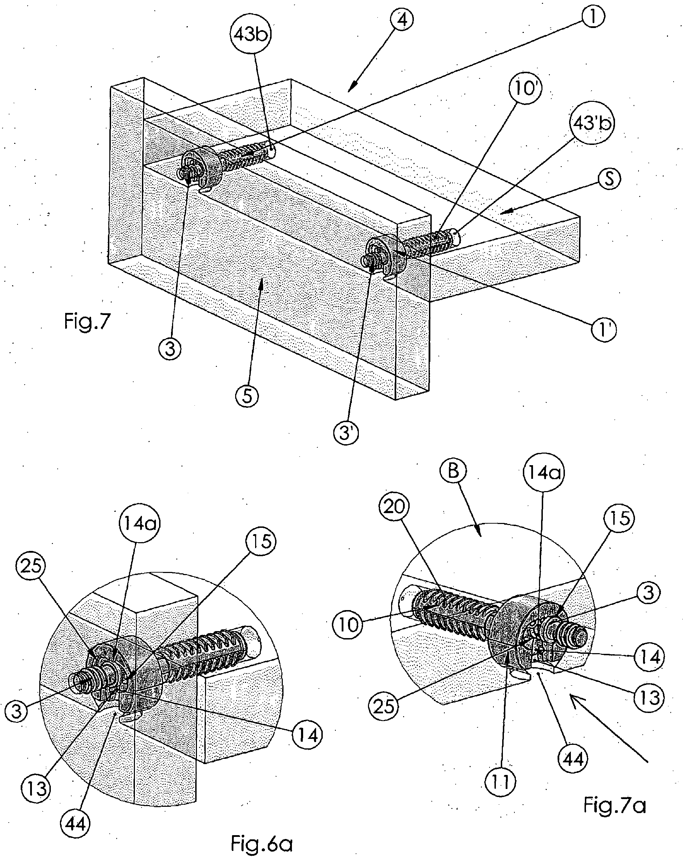

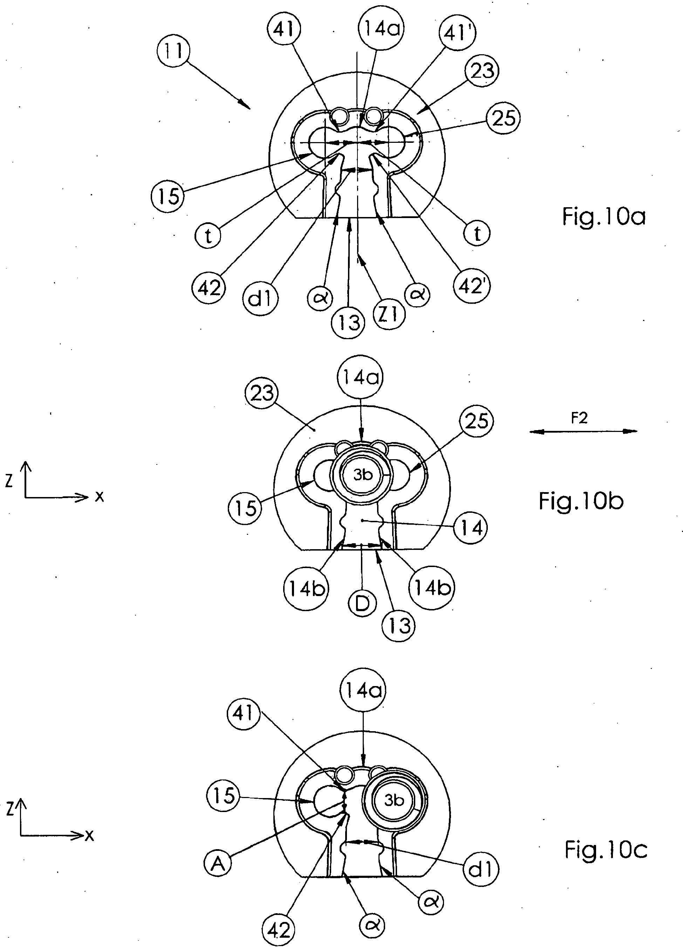

Pin 3 or 3' slides into the sliding channel 14, 14' of slot 12 or 12' along axis of insertion Z being guided in this movement by inner wall 28 of front edge 23 and being progressively drawn towards shelf 4 by the inner wall, that is in the direction of transverse axis Y. As shelf 4 continues to be pushed in the direction of arrow F, pin 3 or 3' is pressed against end portion 14a, 14'a of sliding channel 14 or 14', as illustrated in Figures 6 and 10b. End portion 14a, 14'a forms an end stop element for pin 3, 3' in sliding channel 14.

In this position the operator can move shelf 4 in a direction transverse to axis of insertion Z, in the version illustrated along a longitudinal axis X, in one of the two directions of arrow F2 in Figures 6, 7 and 10b, to move pin 3 into one of the two eyelets 15 or 25, or 15' 25' of each supporting element 1, 1', that is into locking position B illustrated in Figures 7 and 10c.

During this movement, the pin 3 is moved from sliding channel 14 through one of two entry openings A into one of eyelets 15 or 25. As mentioned, entry opening A has smaller dimensions than the dimensions of shank 3b of the pin, therefore as the shank passes through edges 41, 42 or 41', 42' deform resiliently from the resting position illustrated in Figure 10a to a deformed position to allow shank 3b to pass through.

When pin 3 is housed in one of eyelets 15 or 25, edges 41, 42 or 41', 42' respectively can return to their initial resting position and constitute resilient retaining means for resiliently retaining pin 3 in eyelets 15 or 25, preventing it from accidentally escaping by lateral movement along longitudinal axis X.

In fact, in order to be able to escape from eyelet 15 or 25 the pin must overcome the resilient retaining force generated by edges 41, 42 or 41' 42' respectively. In addition to this the walls of the eyelet retain the pin, preventing it from moving along axis of insertion Z.

Edges 41, 42, 41', 42' act as resilient retaining means for pin 3 preventing accidental movements of shelf 4 with respect to upright 5 during assembly. In this position shelf 4 is therefore stable with respect to upright 5, that is the conformation of supporting element 1 prevents shelf 4 from accidentally falling. In particular the inherent weight of shelf 4 helps to keep it attached to upright 5. In this position there is no need for the operator to support shelf 4, because the conformation of supporting element 1, 1' and in particular inner wall 28 and/or the walls of the eyelets and edges 41, 42 or 41', 42' respectively make it possible for attachment pin 3, 3' to be held in eyelets 15, 15' or 25, 25' and accidental falls of shelf 4 are avoided.

The conformation of inner wall 28 makes it possible to keep pin 3 under tension, preventing it from accidentally escaping before pin 3 is inserted in eyelets 15 or 25, by lateral movement along transverse axis Y.

Because eyelets 15, 25 are at a distance "t" from sliding channel 14, this makes it possible to prevent pin 3 from escaping from eyelets 15, 25 by lateral movement along axis of insertion Z, and this, as mentioned, makes it possible to help assembly operations because there is no need to support the shelf when it is in locked position B.

At this point the operator can take hold of a locking device 2, 2' and insert it in each hole 43, 43'. Locking device 2 is moved in the direction of inserting arrow F3 in Figures 8 and 9, in such a way that locking element 31 is progressively inserted into sliding channel 14 of slot 12.

Locking device 2, 2' is pressed into slot 12 until locking element 31 is inserted into sliding channel 14 and comes into contact with pin 3b in such a way that it is positioned between pin 3 and sliding channel 14 and in fact locks pin 3 in eyelet 15 or 25, as may be seen in Figure 9, attachment configuration B'.

Slot 12 and/or locking element 31 are mutually dimensioned in such a way that when in attachment configuration B' projection 31b is at a distance from end portion 14a and in such a way as to generate locking of more than 2/3 of a circle with eyelets 15 or 25, preventing pin 3 from escaping from eyelets 15 or 25.

Locking element 31 is inserted into slot 12 in such a way as to close off entry opening A to eyelets 15, 25, in fact preventing the pin from escaping from eyelet 15 or 25 in which it is housed.

The dimensions of locking element 31 will vary according to the thickness of shelf 4 and/or the dimensions of slot 12.

In attachment position B' base portion 30 of locking device 2 is positioned in opening 44 so as to cover it. The abovementioned operation may be repeated in order to secure the various shelves in the item of furniture to the uprights.

With fastening system 100 in attachment position B' shelf 4 is stably attached to upright 5. This assembly has been performed without the need to use any suitable tools. This means that assembly operations are made easier, and any damage to the shelf and/or upright arising for example from incorrect use of tools and/or the operator's inexperience is also avoided. Furthermore, by inserting locking device 2 in slot 12 of supporting element 1, pin 3, 3' is stably locked in eyelet 15 or 25 in attachment position B'.

In order to remove shelf 4 from uprights 5, for example in order to dismantle the item of furniture, the operator will first extract locking device 2, possibly the help of a screwdriver or similar device, to disconnect locking device 2 from hole 43. The operator will gain access to base 30 of locking device 2 which is positioned in opening 44 and by levering with a screwdriver or other tool will raise base 30 of opening 44 and remove locking device 2 from hole 43. Subsequently the operator will take hold of shelf 4 in order to move it in the direction of longitudinal axis X in order to remove pins 3, 3' from the eyelets, moving them into sliding channel 14 and finally moving shelf 4 along axis of insertion Z in a direction opposite to that indicated by arrow F, causing pin 3 to escape from slot 12 and in fact disconnecting shelf 4 and upright 5.

Preferably, as mentioned, shelf 4 is mounted at 90° with respect to upright 5, however other orientations can be achieved with the system according to the invention.

In the version illustrated the direction of insertion is parallel to vertical axis Z and sliding channel 14, and is therefore vertical, although in other versions not shown supporting element 1 is positioned in hole 43 in such a way that sliding channel 14 extends along a transverse direction of insertion with respect to vertical axis Z.

In addition to this, in other versions riot illustrated, the pins may be attached to the shelf which has to be attached and supporting element 1 may be attached to the upright.

Preferably locking element 2 is made of plastics material and supporting element 1 is made as a single piece by moulding plastics material.

## Claims

1. A fastening system (100) for attaching a shelf (4) or other supporting member of an item of furniture to a structure of an item of furniture (5) comprising:
an attachment pin (3,3');
a supporting element (1) intended to be inserted into a hole (43, 43', 43a, 43b) formed in said shelf (4), the supporting element (1) being provided with a slot (12) comprising a sliding channel (14) shaped so as to slidably house the attachment pin (3, 3'), said pin (3, 3') being capable of moving in said sliding channel (14) along an axis of insertion (Z) and being intended to be attached to said structure of an item of furniture (5),
said slot (12) comprising a eyelet (15, 25) communicating with said sliding channel (14) to permit said pin (3) to move between said sliding channel (14) and said eyelet (15, 25) and constructed to house said pin (3), said eyelet (15, 25) being at a distance from said sliding channel (14) in a transverse direction (X) with respect to said axis of insertion (Z), **characterised in that**
the fastening system (100) further comprises a separate locking device (2) independent of the supporting element (1) intended to be inserted into said sliding channel (14) so that it is positioned between said pin (3) and said sliding channel (14) so as to lock said pin (3) in said eyelet (15, 25).

2. System according to claim 1, wherein said pin (3) has a shank (3b) and a head (3a) having larger radial dimensions than said shank (3b).

3. System according to the preceding claim, wherein said sliding channel (14) has a front opening (26) with a width (d1) in the transverse direction (X) which is dimensioned to allow said shank (3b) but not said head (3a) to pass therethrough, thus preventing said pin (3) from undesirably escaping from said sliding channel (14) through movements along a further transverse axis (Y).

4. System according to any one of claims 1 to 3, wherein said eyelet (15, 25) is at a distance of length (t) between 0.5 and 10 mm, preferably between 2 and 4 mm, from said axis of insertion (Z).

5. System according to any one of claims 1 to 4, wherein said supporting element (1) comprises a first eyelet (15) and a second eyelet (25) located on opposite sides of said sliding channel (14).

6. System according to any one of the preceding claims, wherein a pair of facing edges (41, 42; 41', 42') intended to define the entry opening (A) from said sliding channel (14) into said eyelet (15, 25) is provided between said sliding channel (14) and said eyelet (15, 25).

7. System according to the preceding claim, wherein the edges (41, 42; 41', 42') of said pair of edges (41, 42; 41', 42') are dimensioned in such a way that said entry opening (A) has smaller dimensions than said eyelet (15, 25).

8. System according to claim 6 or 7, wherein the edges of the pair of edges (41, 42; 41', 42') are resiliently deformable in such a way as to constitute resilient retaining means for said pin (3) in said eyelet (15, 25).

9. System according to any one of the preceding claims, wherein said sliding channel (14) is bounded by a rear wall (22) and an inner wall (28) which is inclined with an angle of inclination. (β) of between 0.5° and 25°, preferably between 1° and 6°, along said sliding channel (14) in such a way as to vary the distance (W) between said inner wall (28) and said rear wall (22) along said sliding channel (14) to generate variable tension on said attachment pin (3) along an axis (Y) transverse to said axis of insertion (Z).

10. System according to any one of the preceding claims, wherein said slide channel (14) has walls (14b) which are inclined with respect to said vertical axis of insertion (Z) by an angle (α) of between 0.5° and 15° in such a way as to form an entry opening (13) into said sliding channel (14) having a length along said longitudinal axis (X) which is longer than the length of said sliding channel (14) to aid insertion of said pin (3) into said sliding channel (14).

11. System according to any one of the preceding claims, wherein said locking device (2) has a base portion (30) and a wedge-shaped locking member (31) extending from said base portion (30) and intended to interact with said pin (3) to lock it in said eyelet (15, 25).

12. Shelf (4) comprising at least one hole (43) on a longitudinal edge (42b, 42a) housing the system according to any one of the preceding claims.

13. Item of furniture comprising at least one upright (5) provided with at least one attachment pin (3) to attach to said upright (5) the shelf (4) according to the preceding claim.

## Patentansprüche

1. Befestigungssystem (100) zum Anbringen eines Regals (4) oder eines anderen Trägerelements eines Möbelstücks an einer Struktur eines Möbelstücks (5), umfassend:
einen Befestigungsstift (3, 3');
ein Trägerelement (1) zum Einführen in ein Loch (43, 43', 43a, 43b), das in dem Regal (4) ausgebildet ist, wobei das Trägerelement (1) mit einem Schlitz (12) ausgestattet ist, der einen Gleitkanal (14) aufweist, welcher derart geformt ist, dass er den Befestigungsstift (3,3') gleitend aufnimmt, wobei der Stift (3,3') in der Lage ist, sich innerhalb des Gleitkanals (14) entlang einer Einführachse (Z)zu bewegen und dazu dient, an der Struktur eines Möbelstücks (5) befestigt zu werden,
wobei der Schlitz (12) eine Öse (15, 25) aufweist, die mit dem Gleitkanal (14) in Verbindung steht, um dem Stift (13) zu ermöglichen, sich zwischen dem Gleitkanal (14) und der Öse (15, 25) zu bewegen, und derart ausgebildet ist, dass sie den Stift (3) aufnimmt, wobei die Öse (15, 25) bezüglich der Einführachse (Z) einen Abstand von dem Gleitkanal (14) in einer Querrichtung (X) aufweist, **dadurch gekennzeichnet, dass**
das Befestigungssystem (100) weiterhin ein separates Sperrteil (2) unabhängig von dem Befestigungsstift (1) aufweist, vorgesehen zum Einführen in den Gleitkanal (14) derart, dass es zwischen dem Stift (3) und dem Gleitkanal (14) positioniert ist, um den Stift (3) in der Öse (15,25) zu verriegeln.

2. System nach Anspruch, bei dem der Stift (3) einen Schaft (3b) und einen Kopf (3a) mit größeren radialen Abmessungen als der Schaft (3b) aufweist.

3. System nach dem vorhergehenden Anspruch, bei dem der Gleitkanal (14) eine Frontöffnung (26) mit einer Breite (d1) in Querrichtung (X) aufweist, die so dimensioniert ist, dass der Schaft (3b), nicht jedoch der Kopf (3a) passieren kann, um dadurch zu verhindern, dass der Stift (3) durch Bewegungen entlang einer weiteren Querachse (Y) unbeabsichtigt aus dem Gleitkanal (14) entweicht.

4. System nach einem der Ansprüche 1 bis 3, bei dem die Öse (15, 25) von der Einführachse (Z) eine Abstandslänge (t) zwischen 0,5 und 10 mm, vorzugsweise zwischen 2 und 4 mm, aufweist.

5. System nach einem der Ansprüche 1 bis 4, bei dem das Trägerelement (1) eine erste Öse (15) und eine zweite Öse (25) aufweist, die aneinander abgewandten Seiten des Gleitkanals angeordnet sind.

6. System nach einem der vorhergehenden Ansprüche, bei dem ein Paar einander zugewandter Kanten (41, 42; 41', 42') zum Definieren der Eintrittsöffnung (A) von dem Gleitkanal (14) in die Öse (15, 25) zwischen dem Gleitkanal (14) und der Öse (15, 25) vorgesehen ist.

7. System nach dem vorhergehenden Anspruch, bei dem die Kanten (41, 42; 41', 42') des Paars von Kanten (41, 42; 41', 42') derart bemessen sind, dass die Eintrittöffnung (A) geringere Abmessungen aufweist als die Öse (15, 25).

8. System nach Anspruch 6 oder 7, bei dem die Kanten des Paars von Kanten (41, 42; 41', 42') derart elastisch verformbar sind, dass sie für den Stift (3) in der Öse (15, 25) eine elastische Halteeinrichtung bilden.

9. System nach einem der vorhergehenden Ansprüche, bei dem der Gleitkanal (14) von einer Rückwand (22) und einer Innenwand (28), die in einem Neigungswinkel (β) zwischen 0,5° und 25°, vorzugsweise zwischen 1 ° und 6° geneigt ist, entlang dem Gleitkanal (14) derart begrenzt ist, dass der Abstand (W) zwischen der Innenwand (28) und der Rückwand (22) entlang dem Gleitkanal (14) variiert, um an dem Befestigungsstift (3) entlang einer Querachse (Y) bezüglich der Einführachse (Z) eine variable Spannung zu erzeugen.

10. System nach einem der vorhergehenden Ansprüche, bei dem der Gleitkanal (14) Wände (14b) aufweist, die bezüglich der vertikalen Einführachse (Z) um einen Winkel (α) zwischen 0,5° und 15° derart geneigt sind, dass eine Eintrittsöffnung (13) in den Gleitkanal (14) mit einer Länge entlang der Längsachse (X) gebildet wird, die größer ist als die Länge des Gleitkanals (14), um das Einführen des Stifts (3) in den Gleitkanal (14) zu unterstützen.

11. System nach einem der vorhergehenden Ansprüche, bei dem das Sperrteil (2) einen Basisabschnitt (30) und ein keilförmiges Sperrelement (31) aufweist, welches sich von dem Basisabschnitt (30) aus erstreckt und ausgebildet ist zum Zusammenwirken mit dem Stift (3), um ihn mit der Öse (15, 25) zu verriegeln.

12. Regal (4) mit mindestens einem Loch (43) an einer Längs-Schmalseite (42b, 42a), welches das System nach einem der vorhergehenden Ansprüche aufnimmt.

13. Möbelstück mit mindestens einem aufrechten Teil (5), das mit mindestens einem Befestigungsstift (3) zum Befestigen des Regals (4) nach dem vorhergehenden Anspruch an dem aufrechten Teil (5) ausgestattet ist.

## Revendications

1. Système de fixation (100) pour fixer une étagère (4) ou un autre élément de support d'un article d'ameublement sur une structure d'un article d'ameublement (5) comprenant :
une goupille de fixation (3, 3') ;
un élément de support (1) prévu pour être inséré dans un trou (43, 43', 43a, 43b) formé dans ladite étagère (4), l'élément de support (1) étant pourvu d'une fente (12) comprenant un canal de coulissement (14) formé de façon à loger de manière coulissante la goupille de fixation (3, 3'), ladite goupille (3, 3') pouvant se déplacer dans ledit canal de coulissement (14) le long d'un axe d'insertion (Z) et étant prévue pour être fixée sur ladite structure d'un article d'ameublement (5),
ladite fente (12) comprenant un oeillet (15, 25) communiquant avec ledit canal de coulissement (14) pour permettre à ladite goupille (3) de se déplacer entre ledit canal de coulissement (14) et ledit oeillet (15, 25) et construit pour loger ladite goupille (3), ledit oeillet (15, 25) étant à distance dudit canal de coulissement (14) dans une direction transversale (X) par rapport audit axe d'insertion (Z), **caractérisé en ce que**
le système de fixation (100) comprend en outre et un dispositif de blocage séparé (2) indépendant de l'élément de support (1) destiné à être inséré dans ledit canal de coulissement (14) de telle manière qu'il est positionné entre ladite goupille (3) et ledit canal de coulissement (14) de façon à bloquer ladite goupille (3) dans ledit oeillet (15, 25).

2. Système selon la revendication 1, dans lequel ladite goupille (3) comporte un axe (3b) et une tête (3a) ayant des dimensions radiales supérieures à celles dudit axe (3b).

3. Système selon la revendication précédente, dans lequel ledit canal de coulissement (14) comporte une ouverture avant (26) avec une largeur (d1) dans la direction transversale (X) qui est dimensionnée pour permettre audit axe (3b) mais pas à ladite tête (3a) de passer à travers, empêchant ainsi ladite goupille (3) de s'échapper de façon indésirable dudit canal de coulissement (14) par des mouvements le long d'un autre axe transversal (Y).

4. Système selon l'une quelconque des revendications 1 à 3, dans lequel ledit oeillet (15, 25) est à une distance de longueur (t) entre 0,5 et 10 mm, de préférence entre 2 et 4 mm, de l'axe d'insertion (Z).

5. Système selon l'une quelconque des revendications 1 à 4, dans lequel ledit élément de support (1) comprend un premier oeillet (15) et un second oeillet (25) situés sur des côtés opposés dudit canal de coulissement (14).

6. Système selon l'une quelconque des revendications précédentes, dans lequel une paire de bords (41, 42 ; 41', 42') se faisant face destinés à définir l'ouverture d'entrée (A) depuis ledit canal de coulissement (14) dans ledit oeillet (15, 25) est fournie entre ledit canal de coulissement (14) et ledit oeillet (15, 25).

7. Système selon la revendication précédente, dans lequel les bords (41, 42 ; 41', 42') de ladite paire de bords (41, 42 ; 41', 42') sont dimensionnés de telle manière que ladite ouverture d'entrée (A) a des dimensions plus petites que ledit oeillet (15, 25).

8. Système selon la revendication 6 ou 7, dans lequel les bords de la paire de bords (41, 42 ; 41', 42') sont élastiquement déformables de façon à constituer des moyens de retenue élastiques pour ladite goupille (3) dans ledit oeillet (15, 25).

9. Système selon l'une quelconque des revendications précédentes, dans lequel ledit canal de coulissement (14) est bordé par une paroi arrière (22) et une paroi intérieure (28) qui est inclinée avec un angle d'inclinaison (β) d'entre 0,5° et 25°, de préférence d'entre 1° et 6°, le long dudit canal de coulissement (14) de façon à varier la distance (W) entre ladite paroi intérieure (28) et ladite paroi arrière (22) le long dudit canal de coulissement (14) pour générer une tension variable sur ladite goupille (3) de fixation le long d'un axe (Y) transversal audit axe d'insertion (Z).

10. Système selon l'une quelconque des revendications précédentes, dans lequel ledit canal de coulissement (14) comporte des parois (14b) qui sont inclinées par rapport audit axe d'insertion (Z) vertical d'un angle (α) d'entre 0,5° et 15° de façon à former une ouverture d'entrée (13) dans ledit canal de coulissement (14) ayant une longueur le long dudit axe longitudinal (X) qui est plus longue que la longueur dudit canal de coulissement (14) pour aider à l'insertion de ladite goupille (3) dans ledit canal de coulissement (14).

11. Système selon l'une quelconque des revendications précédentes, dans lequel ledit dispositif blocage (2) comporte une partie de base (30) et un élément de blocage en forme coin (31) s'étendant depuis ladite partie de base (30) et destiné à interagir avec ladite goupille (3) pour la bloquer dans ledit oeillet (15, 25).

12. Étagère (4) comprenant au moins un trou (43) sur un bord longitudinal (42b, 42a) logeant le système selon l'une quelconque des revendications précédentes.

13. Article d'ameublement comprenant au moins un montant (5) pourvu d'au moins une goupille (3) de fixation pour fixer sur ledit montant (5) l'étagère (4) selon la revendication précédente.
